# EUROPÄISCHE PATENTSCHRIFT

(11) **EP 3 490 839 B1**
(45) Veröffentlichungstag und Bekanntmachung des Hinweises auf die Patenterteilung: **04.03.2020**
(21) Anmeldenummer: 17748627.1
(22) Anmeldetag: 27.07.2017
(51) Int. Cl.: B60N 2/68, B60N 2/28, B60N 2/90

(54) **KINDERSITZ**
CHILD SAFETY SEAT
SIEGE D'ENFANT

(30) Priorität: 27.07.2016 AT 506792016
(43) Veröffentlichungstag der Anmeldung: 05.06.2019
(73) Patentinhaber: Nachfolger GmbH, 1020 Wien (AT)
(72) Erfinder: MITTER, Gerd, 1020 Wien (AT); KELLER, Rainald, 1020 Wien (AT)
(74) Vertreter: Sonn & Partner Patentanwälte
(86) Internationale Anmeldenummer: PCT/AT2017/060191
(87) Internationale Veröffentlichungsnummer: WO 2018/018060

(56) Entgegenhaltungen:
- EP-A1- 2 502 780
- EP-A1- 2 546 096
- DE-U1- 9 407 584
- US-A1- 2007 085 394

## Beschreibung

Die Erfindung betrifft einen Kindersitz zur Befestigung an einem Fahrzeugsitz eines Fahrzeugs entgegen dessen Fahrtrichtung, mit einem Sitzelement, einem Rückenelement, einem ersten Seitenelement mit einer ersten aufblasbaren Luftkammer und einem zweiten Seitenelement mit einer zweiten aufblasbaren Luftkammer, wobei das erste Seitenelement mit einem ersten Längsrand des Rückenelements und einem ersten Längsrand des Sitzelements und das zweite Seitenelement mit einem zweiten Längsrand des Rückenelements und einem zweiten Längsrand des Sitzelements verbunden ist.

Weiters betrifft die Erfindung ein Fahrzeug mit einem solchen Kindersitz.
Ein Beispiel für einen solchen Kindersitz wurde in der EP 2 546 096 B1 offengelegt. Der bekannte Kindersitz wird entgegen der Fahrtrichtung des Fahrzeugs montiert. Dadurch kann insbesondere der Kopf des Kindes bei einer plötzlichen Verzögerung besser geschützt werden. Bei diesem Stand der Technik wurde zudem bereits vorgeschlagen, zumindest einzelne Teile der Sitzschale bestehend aus zwei Seitenteilen, einem Gesäßteil und einem Rückenteil mit aufblasbaren Luftkammern auszustatten. Zu diesem Zweck wurden insbesondere sogenannte "drop-stitch"-Gewebe verwendet, bei denen mit vertikalen Fäden zwei flächige Gewebeteile in einem vorgegebenen Abstand zueinander angeordnet werden. Diese Ausführung hat den Vorteil, dass die Sitzschale im aufgeblasenen Zustand eine hohe Steifigkeit und Formstabilität aufweisen kann. Andererseits kann der Kindersitz im unaufgeblasenen Zustand einfach transportiert werden. Schließlich kann das Gewicht reduziert werden.

Als problematisch hat sich in der Praxis die bislang ungenügende Stabilität solcher Kindersitze erwiesen, an welche von den zuständigen Aufsichtsbehörden hohe Anforderungen gestellt werden. In der EP 2 546 096 B1 wurde eine Ausführung offenbart, bei der Verstärkungsgurte am Kindersitz angebracht werden. Es wurde ein erster Verstärkungsgurt an der Außenseite und ein zweiter Verstärkungsgurt an der Innenseite des Kindersitzes angeordnet. Der innere Verstärkungsgurt wurde an jedem Seitenteil an drei Befestigungsstellen befestigt. Diese Ausführung bringt jedoch den Nachteil mit sich, dass die Kraftableitung vom Rückenteil in den Sitzteil ungenügend ist.

Ein solcher Kindersitz ist zudem aus der EP 2 502 780 A1 bekannt.

Die US 5022669 A offenbart einen Kindersitz, an dessen Unterseite Räder angeordnet sind, so dass der Kindersitz auch als Kinderwagen verwendbar ist.

Die Aufgabe der Erfindung besteht darin, die Nachteile des Standes der Technik zu beheben bzw. zu lindern. Die Erfindung setzt sich insbesondere zum Ziel, die Stabilität des Kindersitzes der eingangs angeführten Art so zu verbessern, dass die bei einem Aufprall des Fahrzeuges auf das Kind wirkenden Spitzenkräfte reduziert werden.

Diese Aufgabe wird durch einen Kindersitz mit den Merkmalen von Anspruch 1 gelöst. Bevorzugte Ausführungen sind in den abhängigen Ansprüchen angegeben.

Erfindungsgemäß ist ein erstes Zugelement jeweils mit dem ersten Längsrand des Rückenelements und mit dem ersten Längsrand des Sitzelements und ein zweites Zugelement jeweils mit dem zweiten Längsrand des Rückenelements und mit dem zweiten Längsrand des Sitzelements verbunden, wobei das erste Zugelement und das zweite Zugelement durch das erste und zweite Seitenelement in einem vorgespannten Zustand angeordnet sind.

Dadurch kann einem auf das Rückenelement aufgebrachten Drehmoment infolge eines Aufpralls des Fahrzeugs zuverlässig entgegengewirkt werden. Die Kräfte werden über das erste und zweite Zugelement vom Rückenelement unmittelbar in das Sitzelement abgeleitet, welches mit einem Sicherheitsgurt entgegen der Fahrtrichtung am Fahrzeugsitz befestigt werden kann. Das erste und zweite Seitenelement sind so an dem Rücken- und Sitzelement angeordnet, dass das erste und zweite Zugelement im aufgeblasenen Zustand des ersten und zweiten Seitenelements gespannt sind, d.h. unter Zug stehen. Vorteilhafterweise ist es bei dieser Ausführung nicht erforderlich, eine Lastabtragung über das erste und zweite Seitenelement vorzunehmen, deren erste und zweite Luftkammer aufblasbar ausgebildet sind. Zu diesem Zweck kann eine Vorrichtung zum Aufblasen der ersten und/oder zweiten Luftkammer vorgesehen sein. Diese Vorrichtung weist bevorzugt ein Einlassventil zum Einbringen eines Füllgases auf. Demgegenüber sind das Sitzelement und das Rückenelement bevorzugt frei von einer aufblasbaren Luftkammer. Bevorzugt weisen das Sitzelement und das Rückenelement jeweils ein höheres Gewicht pro Volumen als das erste und zweite Seitenelement im aufgeblasenen Zustand auf.

Zudem ist es bevorzugt, wenn das erste und zweite Seitenelement im Wesentlichen ident ausgebildet sind.

In einer bevorzugten Ausführung weist das erste und zweite Seitenelement jeweils ein erstes flächiges Gewebe und ein zweites flächiges Gewebe auf, welche unter Freilassung der ersten bzw. zweiten Luftkammer über vertikale Fäden miteinander verbunden sind (sogenanntes "drop-stitch"-Gewebe). Dadurch sind das erste und zweite Seitenelement im aufgeblasenen Zustand formstabil und steif.

Für die Zwecke dieser Offenbarung beziehen sich die Orts- und Richtungsangaben, wie "vorne", "hinten", "oben", "unten", "nach vorne", "nach hinten", auf bestimmungsgemäßen Montagezustand an dem Fahrzeugsitz.

Um das Rückenelement bei einem Frontalaufprall des Fahrzeugs gegenüber dem Sitzelement zu versteifen, ist es vorteilhaft, wenn das erste Zugelement jeweils an einem oberen Endbereich des ersten Längsrandes des Rückenelements und an einem vorderen Endbereich des ersten Längsrandes des Sitzelementes befestigt ist, wobei das zweite Zugelement jeweils an einem oberen Endbereich des zweiten Längsrandes des Rückenelements und an einem vorderen Endbereich des zweiten Längsrandes des Sitzelementes befestigt ist.

Die Stabilität des Kindersitzes kann weiter verbessert werden, wenn ein drittes Zugelement jeweils mit dem ersten Längsrand des

Rückenelements und mit dem ersten Längsrand des Sitzelements und ein viertes Zugelement jeweils mit dem zweiten Längsrand des Rückenelements und mit dem zweiten Längsrand des Sitzelements verbunden ist.

Das erste und zweite Zugelement können über ein fünftes Zugelement und/oder über ein sechstes Zugelement miteinander verbunden sein. Das fünfte Zugelement verläuft vorzugsweise im Bereich eines oberen Querrandes des Rückenelements. Das sechste Zugelement verläuft vorzugsweise im Bereich eines vorderen Querrandes des Sitzelementes. Bei dieser Ausführung können das erste, zweite, fünfte und/oder sechste Zugelement als Abschnitte eines zusammenhängenden Zugelements ausgebildet sein.

Zur Kraftübertragung zwischen dem Rückenelement und dem Sitzelement ist es besonders günstig, wenn als erstes und/oder zweites und/oder drittes und/oder viertes Zugelement ein Zugseil, ein Zuggurt oder eine Kette vorgesehen ist.

Um den Kindersitz im nicht aufgeblasenen Zustand des ersten und zweiten Seitenelements in eine kompakte Transportstellung überführen zu können, ist es von Vorteil, wenn das Rückenelement einen oberen Rückenteil und einen unteren Rückenteil aufweist, wobei das obere Rückenteil über eine gelenkige Verbindung mit dem unteren Rückenteil verbunden ist.

Um das zweiteilige Rückenelement gegen die bei einem Unfall auftretenden Kräfte zu stabilisieren, ist es günstig, wenn das eine Ende des dritten Zugelements an einem oberen Endbereich des ersten Längsrandes des unteren Rückenteils und das eine Ende des vierten Zugelements an einem oberen Endbereich des zweiten Längsrandes des unteren Rückenteils befestigt ist, wobei das andere Ende des dritten Zugelements bevorzugt im Wesentlichen mittig an dem ersten Längsrand des Sitzelementes und das andere Ende des vierten Zugelements bevorzugt im Wesentlichen mittig an dem zweiten Längsrand des Sitzelementes befestigt ist.

Zur stabilen Befestigung des Kindersitzes an dem Fahrzeugsitz weist das Sitzelement gemäß einer bevorzugten Ausführungsform eine erste und eine zweite Durchtrittsöffnung zum Durchführen eines Gurtabschnitts eines Sicherheitsgurtes auf. Bei der Montage des Kindersitzes kann der Gurtabschnitt des Sicherheitsgurtes von unten durch die erste Durchtrittsöffnung zur Oberseite des Sitzelementes geführt werden. Danach kann der Gurtabschnitt im Wesentlichen in Querrichtung des Sitzelementes gezogen und durch die zweite Durchtrittsöffnung geführt werden, um danach eine Schlosszunge des Sicherheitsgurtes mit einem Gurtschloss zu verbinden.

Zur Führung des Sicherheitsgurtes weist das Sitzelement bevorzugt benachbart der ersten Durchtrittsöffnung eine erste Umlenckante und benachbart der zweiten Durchtrittsöffnung eine zweite Umlenkkante für den Gurtabschnitt des Sicherheitsgurtes auf.

Um eine besonders wirksame Kraftübertragung von dem Rückenelement über das erste, zweite, dritte und vierte Zugelement auf das Sitzelement zu ermöglichen, erstreckt sich die erste Umlenckante des Sitzelements in Längsrichtung des Sitzelements gesehen bevorzugt zwischen den Befestigungsstellen des ersten und dritten Zugelements an dem ersten Längsrand des Sitzelements, wobei sich die zweite Umlenkkante des Sitzelements in Längsrichtung des Sitzelements gesehen zwischen den Befestigungsstellen des zweiten und vierten Zugelements an dem zweiten Längsrand des Sitzelements erstreckt.

Um den Gurtabschnitt des Sicherheitsgurtes zuverlässig an dem Sitzelement anzubringen, kann die erste und/oder die zweite Umlenkkante des Sitzelements abgeflacht sein. Bevorzugt ist die erste und/oder zweite Umlenkkante jeweils in einem spitzen Winkel zum Abschnitt des Sitzelementes zwischen der ersten und zweiten Durchtrittsöffnung angeordnet.

Um die Umlenkung des Gurtabschnittes am Sitzelement zu erleichtern, weist die erste und/oder zweite Durchtrittsöffnung bevorzugt einen sich in Richtung weg von einer Vorderkante des Sitzelements verbreiternden Abschnitt auf. Demnach nimmt die Öffnungsbreite der ersten und/oder zweiten Durchtrittsöffnung in Draufsicht nach hinten (d.h. in Richtung des Rückenelements) zu. Dadurch wird die erste und/oder zweite Umlenkkante winkelig zum ersten bzw. zweiten Längsrand des Sitzelements angeordnet, so dass das Umschlagen des Gurtabschnitts des Sicherheitsgurts bei der Montage des Kindersitzes am Fahrzeugsitz erleichtert wird.

Um den Sicherheitsgurt zuverlässig im festgezurrten Zustand an dem Kindersitz zu halten ist bevorzugt eine Gurtklemme zum Festklemmen zumindest eines Gurtabschnitts des Sicherheitsgurts in Querrichtung des Sitzelements gesehen zwischen der ersten und zweiten Durchtrittsöffnung des Sitzelements vorgesehen.

Hinsichtlich einer kompakten Transportstellung des Kindersitzes ist bei einer bevorzugten Ausführungsform vorgesehen, dass das Rückenelement, insbesondere das untere Rückenteil des Rückenelements, vorzugsweise über ein Gleitgelenk oder über ein Filmscharnier, gelenkig mit dem Sitzelement verbunden ist.

Gemäß einer bevorzugten Ausführungsform weist das erste Seitenelement an einer Innenseite zumindest ein erstes Führungselement zur Führung des ersten Zugelements und/oder zumindest ein zweites Führungselement zur Führung des dritten Zugelements und/oder das zweite Seitenelement an einer Innenseite zumindest ein drittes Führungselement zur Führung des zweiten Zugelements auf und/oder das zweite Seitenelement an einer Innenseite zumindest ein viertes Führungselement zur Führung des vierten Zugelements auf.

Um eine formstabile Sitzschale vorzusehen, ist es günstig, wenn das Sitzelement und/oder das Rückenelement im Wesentlichen aus einem Hartplastikmaterial, insbesondere aus Polyamid oder Polypropylen, oder aus einem faserverstärkten Kunststoff gefertigt ist.

Zur Kraftableitung in das Fahrzeug bei einem Heckaufprall ist es günstig, wenn das erste Seitenelement an einer vorderen Stirnseite eine Anlagefläche zur Anlage an einer Rückenlehne des Fahrzeugsitzes derart aufweist, dass das obere Ende der Anlagefläche im montierten Zustand des Kindersitzes in einem Abstand von zumindest 170 mm in Längsrichtung der Rückenlehne gesehen zum unteren Ende der Rückenlehne angeordnet ist.

Die Erfindung wird nachstehend anhand eines bevorzugten Ausführungsbeispiels weiter erläutert. Im Einzelnen zeigt:
Fig. 1 eine schaubildliche Ansicht eines erfindungsgemäßen Kindersitzes, welcher ein Sitzelement, ein Rückenelement und ein erstes und zweites Seitenelement im aufgeblasenen Zustand aufweist;
Fig. 2 eine Explosionsansicht des Kindersitzes gemäß Fig. 1;
Fig. 3 eine schaubildliche Ansicht des Kindersitzes gemäß Fig. 1, 2, wobei schematisch die Anordnung eines Sicherheitsgurtes dargestellt ist;
Fig. 4 eine Seitenansicht des Kindersitzes gemäß Fig. 1 bis 3 im montierten Zustand an einem Fahrzeugsitz, wobei eines der Seitenelemente der besseren Übersicht halber nicht eingezeichnet ist;
Fig. 5 eine schaubildliche Ansicht von Teilen des Kindersitzes gemäß Fig. 1 bis 4;
Fig. 6 eine weitere schaubildliche Ansicht des Kindersitzes gemäß Fig. 1 bis 5, wobei schematisch ein Kinder-Gurt zur Sicherung eines Kindes in dem Kindersitz eingezeichnet ist; und
Fig. 7 den Kindersitz gemäß Fig. 1 bis 6 von unten, wobei schematisch eine Einrichtung zum Aufblasen des ersten und zweiten Seitenelements ersichtlich ist.

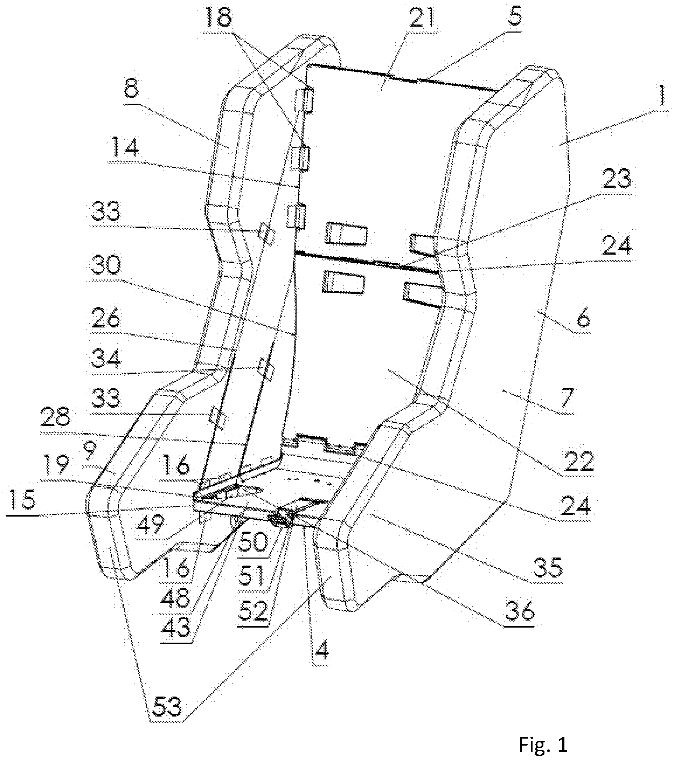

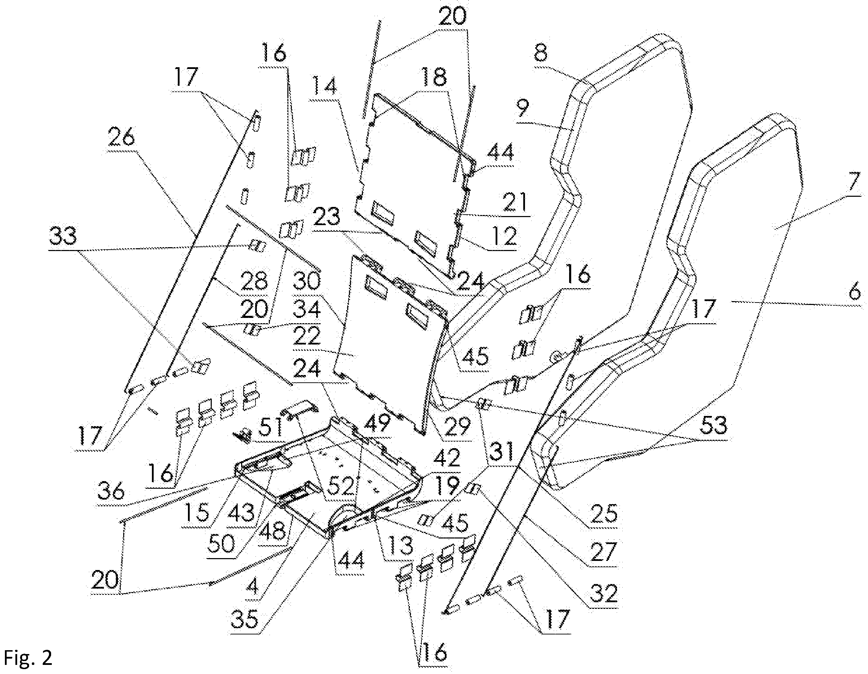

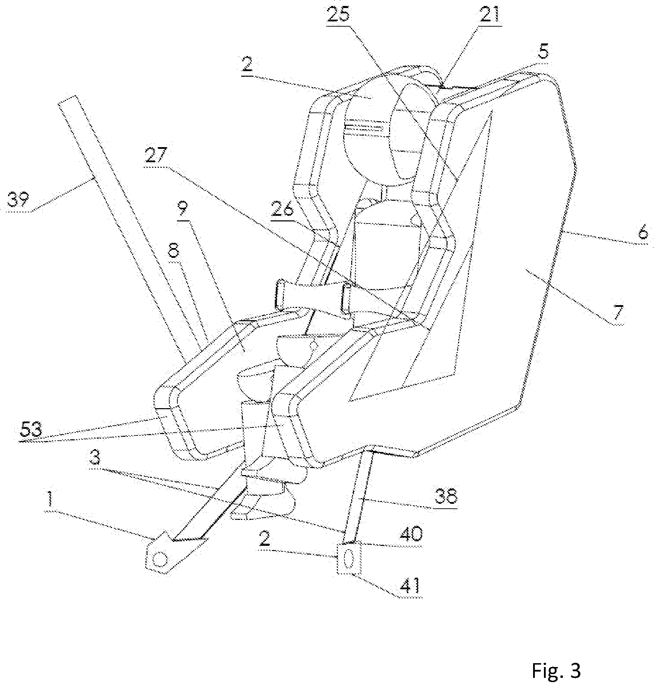

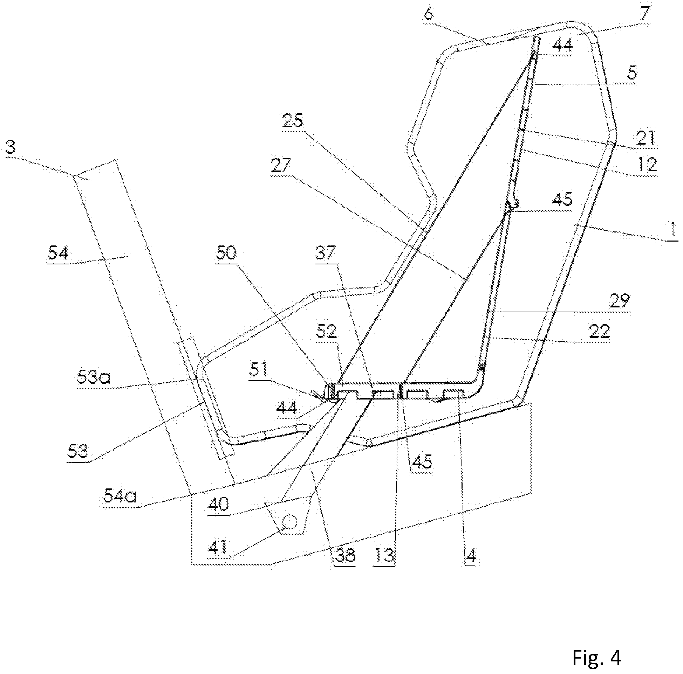

Fig. 1, 2 zeigen einen Kindersitz 1 für ein Kind, welches in Fig. 3 durch einen Dummy 2 repräsentiert wird. Der Kindersitz 1 ist zur Befestigung an einem Fahrzeugsitz 3 eines Fahrzeugs, insbesondere eines Personenkraftwagens, entgegen dessen Fahrtrichtung vorgesehen (vgl. Fig. 4). Der Kindersitz 1 weist ein Sitzelement 4 auf, welches bei bestimmungsgemäßem Gebrauch des Kindersitzes 1 das Gesäß des Kindes stützt. Zudem weist der Kindersitz 1 ein Rückenelement 5 auf, mit welchem bei bestimmungsgemäßem Gebrauch des Kindersitzes 1 der Rücken und der Kopf des Kindes gestützt wird. Auf dem Rückenelement 5 und dem Sitzelement 4 kann eine (in der Zeichnung nicht dargestellte) Polsterung angeordnet sein. Das Rückenelement 5 und das Sitzelement 4 schließen einen Sitzöffnungswinkel ein, welcher vorzugsweise größer als 90° ist.

Der Kindersitz 1 weist an den Seiten (bezogen auf die Fahrtrichtung des Fahrzeugs) ein erstes Seitenelement 6 mit einer ersten aufblasbaren Luftkammer 7 und ein zweites Seitenelement 8 mit einer zweiten aufblasbaren Luftkammer 9 auf. Demgegenüber sind das Sitzelement 4 und das Rückenelement 5 jeweils aus einem formstabilen, nicht-aufblasbaren Material gebildet. Vorzugsweise sind das Sitzelement 4 und das Rückenelement 5 im Wesentlichen aus einem Hartplastikmaterial, insbesondere aus Polyamid oder Polypropylen, gefertigt.

Das erste Seitenelement 6 ist jeweils mit einem ersten Längsrand 12 des Rückenelements 5 und mit einem ersten Längsrand 13 des Sitzelements 4 verbunden. Das zweite Seitenelement 8 ist jeweils mit einem zweiten Längsrand 14 des Rückenelements 5 und mit einem zweiten Längsrand 15 des Sitzelements 4 verbunden. Der erste 12 und zweite Längsrand 14 des Rückenelements 5 erstrecken sich seitlich am Rückenelement 5 und sind über einen oberen Querrand und einen unteren Querrand des Rückenelements 5 miteinander verbunden. Dementsprechend erstrecken sich der erste 13 und zweite Längsrand 15 des Sitzelements 5 seitlich am Sitzelement 5 und sind über einen oberen Querrand und einen unteren Querrand des Sitzelements 4 miteinander verbunden. In der gezeigten Ausführungsform sind an den Innenseiten des ersten 6 und zweiten Seitenelements 8 Laschen 16 angebracht, in denen Steckhülsen 17 aufgenommen sind. Die Laschen 16 mit den Steckhülsen 17 sind in seitlichen Aussparungen 18 des Rückenelements und seitlichen Aussparungen 19 des Sitzelements angeordnet und dort mit Haltestangen 20 fixiert. Selbstverständlich könnten das erste 6 und zweite Seitenelement 8 jedoch auch auf vielfältige andere Weise an dem Rückenelement 5 und dem Sitzelement 4 befestigt werden.

Wie aus Fig. 1 ersichtlich, weist das Rückenelement 5 einen oberen Rückenteil 21 und einen unteren Rückenteil 22 auf. Das obere Rückenteil 21 ist über eine gelenkige Verbindung 23 mit dem unteren Rückenteil 22 verbunden. Zur Ausbildung der gelenkigen Verbindung 23 zwischen dem oberen 21 und unteren Rückenteil 22 kann zumindest ein Gleitgelenk, in der Darstellung drei Gleitgelenke 24, vorgesehen sein. Weiters ist das untere Rückenteil 22 des Rückenelements 5 gelenkig mit dem Sitzelement 4 verbunden. Zu diesem Zweck sind in der gezeigten Ausführung drei Gleitgelenke 24 zwischen dem unteren Rückenteil 22 und dem Sitzelement 4 vorgesehen.

Im aufgeblasenen Zustand ist der Kindersitz 1 ähnlich groß wie ein herkömmlicher Kindersitz. Im zusammengefalteten Zustand lässt sich der Kindersitz 1 aber wesentlich kompakter in einem Kofferraum oder in einem Schrank verstauen.

Wie aus Fig. 1 ersichtlich, sind zur Verspannung des Rückenelements 5 gegenüber dem Sitzelement 4 ein erstes 25 und ein zweites Zugelement 26 vorgesehen. Das eine Ende des ersten Zug- bzw. Spannelements 25 ist an dem ersten Längsrand 12 des Rückenelements 5 und das andere Ende des ersten Zug- bzw. Spannelements 25 ist mit dem ersten Längsrand 13 des Sitzelements 4 fixiert. Das eine Ende des zweiten Zug- bzw. Spannelements 26 ist an dem zweiten Längsrand 14 des Rückenelements 5 und das andere Ende des zweiten Zug- bzw. Spannelements 26 ist an dem zweiten Längsrand 15 des Sitzelements 4 fixiert. Das erste Zugelement 25 ist in der gezeigten Ausführung jeweils an einem oberen Endbereich des ersten Längsrandes 12 des Rückenelements 5 und an einem vorderen Endbereich des ersten Längsrandes 13 des Sitzelementes 4 befestigt. Das zweite Zugelement 26 ist jeweils an einem oberen Endbereich des zweiten Längsrandes 14 des Rückenelements 5 und an einem vorderen Endbereich des zweiten Längsrandes 15 des Sitzelementes 4 befestigt.

Wie aus Fig. 1 ersichtlich, sind in der gezeigten Ausführung zudem ein drittes 27 und ein viertes Zug- bzw. Spannelement 28 vorgesehen. Die Enden des dritten Zugelements 27 sind jeweils mit dem ersten Längsrand des Rückenelements 12 und mit dem ersten Längsrand des Sitzelements 13 verbunden. Die Enden des vierten Zugelements 28 sind jeweils mit dem zweiten Längsrand des Rückenelements 14 und mit dem zweiten Längsrand des Sitzelements 5 verbunden. In der gezeigten Ausführung ist das eine Ende des dritten Zugelements 27 an einem oberen Endbereich des ersten Längsrandes 29 des unteren Rückenteils 22 und das eine Ende des vierten Zugelements 28 an einem oberen Endbereich des zweiten Längsrandes 30 des unteren Rückenteils 22 befestigt. Das andere Ende des dritten Zugelements 27 ist im Wesentlichen mittig an dem ersten Längsrand 13 des Sitzelementes 4 und das andere Ende des vierten Zugelements 28 im Wesentlichen mittig an dem zweiten Längsrand 15 des Sitzelementes 4 befestigt.

Das erste 25, zweite 26, dritte 27 und vierte Zugelement 28 sind durch die Anordnung des ersten 6 und zweiten Seitenelements 8 in deren aufgeblasener Gebrauchsstellung in einem gespannten Zustand angeordnet. In der gezeigten Ausführungsform sind als erstes 25, zweites 26, drittes 27 und viertes Zugelement 28 Zugseile vorgesehen.

Das erste Seitenelement 6 weist an dessen Innenseite zumindest ein erstes Führungselement 31, in der gezeigten Ausführung zwei erste Führungselemente 31, zur Führung des ersten Zugelements 25 und zumindest ein zweites Führungselement 32, in der gezeigten Ausführung genau ein zweites Führungselement 32, zur Führung des dritten Zugelements 27 an der Innenseite des ersten Seitenelements 6 auf. Dementsprechend weist das zweite Seitenelement 8 an dessen Innenseite zumindest ein drittes Führungselement 33, in der gezeigten Ausführung zwei dritte Führungselemente 33, zur Führung des zweiten Zugelements 26 und ein viertes Führungselement 34, in der gezeigten Ausführung genau ein viertes Führungselement 34, zur Führung des vierten Zugelements 28 an der Innenseite des zweiten Seitenelements 8 auf.

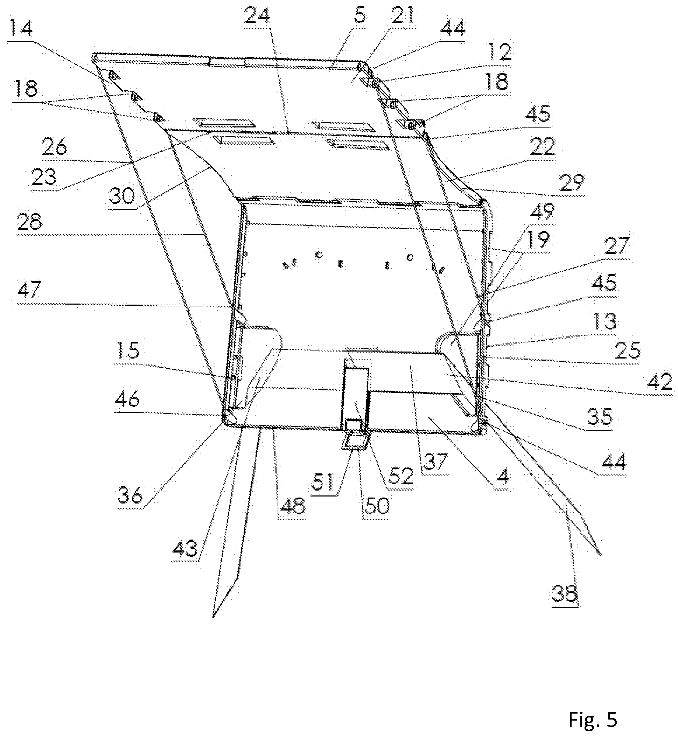

Wie aus Fig. 1 (vgl. insbesondere auch Fig. 5) ersichtlich, weist das Sitzelement 4 eine erste 36 und eine zweite Durchtrittsöffnung 36 zum Durchführen eines Gurtabschnitts 37 eines Sicherheitsgurtes 38 auf.

Wie aus Fig. 3, 4 ersichtlich, ist als Gurtabschnitt 37 in der gezeigten Ausführung ein Beckengurtteil 37a eines 3-Punkt-Sicherheitsgurtes vorgesehen, welcher zudem einen Schultergurtteil 39 aufweist. Der Sicherheitsgurt 38 weist zudem eine Schlosszunge 40 auf, an welcher der Beckengurtteil 37a in den Schultergurtteil 39 übergeht. Die Schlosszunge 40 kann lösbar mit einem (in Fig. 3 schematisch dargestellten) Gurtschloss 41 verbunden werden. Angrenzend an die erste Durchtrittsöffnung 35 ist eine erste Umlenkkante 42, angrenzend an die zweite Durchtrittsöffnung 36 eine zweite Umlenkkante 43 für den Gurtabschnitt 37 des Sicherheitsgurtes 38 ausgebildet. Die erste Umlenkkante 42 des Sitzelements 4 erstreckt sich in Längsrichtung des Sitzelements 4 gesehen zwischen den Befestigungsstellen des ersten 44 und dritten Zugelements 45 an dem ersten Längsrand 13 des Sitzelements 4. Entsprechend erstreckt sich die zweite Umlenkkante 43 des Sitzelements 4 in Längsrichtung des Sitzelements 4 gesehen zwischen den Befestigungsstellen des zweiten 46 und vierten Zugelements 47 an dem zweiten Längsrand 15 des Sitzelements 4. In der gezeigten Ausführung sind die erste 42 und die zweite Umlenkkante 43 des Sitzelements abgeflacht. Weiter weisen die erste 35 und die zweite Durchtrittsöffnung 36 jeweils einen sich in Richtung weg von einer Vorderkante 48 des Sitzelements verbreiternden Abschnitt 49 auf.

Wie aus Fig. 1 (vgl. insbesondere auch Fig. 5) ersichtlich, ist eine Gurtklemme 50 zum Festklemmen zumindest eines Gurtabschnitts 37 des Sicherheitsgurts 38 in Querrichtung des Sitzelements 4 gesehen zwischen der ersten 35 und zweiten Durchtrittsöffnung 36 des Sitzelements 4 vorgesehen. Die Gurtklemme 50 weist einen Schwenkhebel 51 und ein Klemmelement 52 auf, damit der Gurtabschnitt 37 in die Gurtklemme 50 eingebracht und festgeklemmt werden kann.

Der Gurt 38 wird durch die erste 35 und zweite Durchtrittsöffnung 36 geführt und die Schlosszunge 40 wird mit dem Gurtschloss 41 verbunden. Durch Ziehen am Schultergurtteil 39 wird der Gurtabschnitt 37 (Beckengurtteil) gestrafft. Ist der Beckengurtteil 37 gespannt, wird der Schultergurtteil 39 über den Beckengurtteil 37 geführt. Die Gurtklemme 50 wird im gespannten Zustand des Gurts 38 geschlossen, damit der Gurt 38 nicht in das Spanntrapez rutscht, welches der Beckengurtteil 37 in Verbindung mit dem Sitz 1 bildet. Dadurch wird zuverlässig vermieden, dass sich die Verbindung zwischen dem Kindersitz 1 und dem Fahrzeugsitz 3 während der Verwendung lockert.

Wie aus Fig. 4 ersichtlich, weisen das erste Seitenelement 6 und das zweite Seitenelement 8 an den vorderen Stirnseiten jeweils eine Anlagefläche 53 zur Anlage an einer Rückenlehne 54 des Fahrzeugsitzes 3 auf. Im bestimmungsgemäßen Gebrauchszustand des Kindersitzes 1 ist das obere Ende 53a der Anlagefläche 53 in einem Abstand von zumindest 170 mm in Längsrichtung der Rückenlehne 54 gesehen zum unteren Ende 54a der Rückenlehne 54 angeordnet.

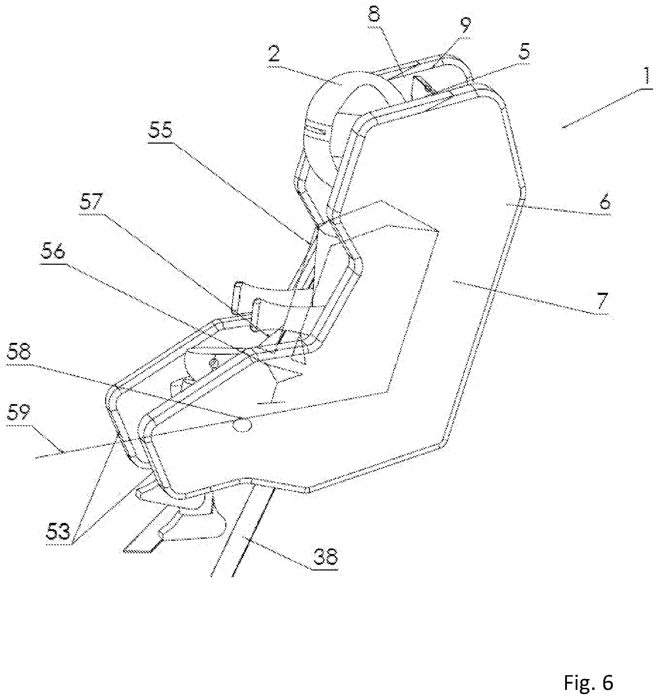

Wie aus Fig. 6 schematisch ersichtlich, weist der Kindersitz 1 einen integrierten Gurt 55 mit einem Gurtschloss 56 auf, das zwischen den Beinen des Kindes angeordnet wird. Darin werden Gurtschlosszungen 57 eingerastet. Anschließend wird der Gurt 55 mit einem Zugband 58 festgezogen und mittels eines Gurt-Spanners 59 fixiert.

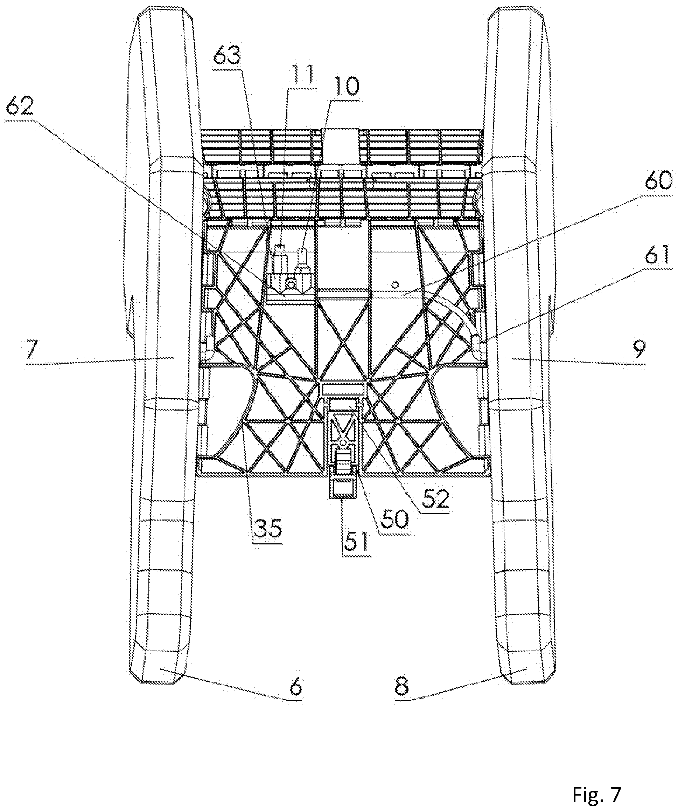

Wie aus Fig. 7 ersichtlich, ist eine Vorrichtung 63 zum Aufblasen der zweiten Luftkammer 9 vorgesehen, welche bevorzugt an der Unterseite des Sitzelements 4 angeordnet ist. Die Vorrichtung 63 weist in der gezeigten Ausführung ein Einlassventil 10, über das Füllgas zugeführt werden kann, ein Überdruckventil 11, eine Verbindungseinheit 62 zum gasdichten Verbinden des Einlass- 10 und Überdruckventils 11 an eine Schlauchverbindung 60, sowie ein Verbindungsstück 61 auf, um das Füllgas von der Schlauchverbindung 60 in die zweite Luftkammer 9 zu bringen. Eine entsprechende Vorrichtung kann zum Aufblasen der ersten Luftkammer 7 vorgesehen sein (nicht gezeigt).

## Patentansprüche

1. Kindersitz (1) zur Befestigung an einem Fahrzeugsitz (3) eines Fahrzeugs entgegen dessen Fahrtrichtung, mit einem Sitzelement (4), einem Rückenelement (5), einem ersten Seitenelement (6) mit einer ersten aufblasbaren Luftkammer (7) und einem zweiten Seitenelement (8) mit einer zweiten aufblasbaren Luftkammer (9), wobei das erste Seitenelement (6) mit einem ersten Längsrand (12) des Rückenelements (5) und einem ersten Längsrand (13) des Sitzelements (4) und das zweite Seitenelement (8) mit einem zweiten Längsrand (14) des Rückenelements (5) und einem zweiten Längsrand (15) des Sitzelements (4) verbunden ist, **dadurch gekennzeichnet, dass** ein erstes Zugelement (25) jeweils mit dem ersten Längsrand (12) des Rückenelements (5) und mit dem ersten Längsrand (13) des Sitzelements (4) und ein zweites Zugelement (26) jeweils mit dem zweiten Längsrand (14) des Rückenelements (5) und mit dem zweiten Längsrand (15) des Sitzelements (4) verbunden ist, wobei das erste Zugelement (25) und das zweite Zugelement (26) durch das erste (6) und zweite Seitenelement (7) in einem vorgespannten Zustand angeordnet sind.

2. Kindersitz (1) nach Anspruch 1, **dadurch gekennzeichnet, dass** das erste Zugelement (25) jeweils an einem oberen Endbereich des ersten Längsrandes (12) des Rückenelements (5) und an einem vorderen Endbereich des ersten Längsrandes (13) des Sitzelementes (4) befestigt ist, wobei das zweite Zugelement (26) jeweils an einem oberen Endbereich des zweiten Längsrandes (14) des Rückenelements (5) und an einem vorderen Endbereich des zweiten Längsrandes (15) des Sitzelementes (4) befestigt ist.

3. Kindersitz (1) nach Anspruch 1 oder 2, **dadurch gekennzeichnet, dass** ein drittes Zugelement (27) jeweils mit dem ersten Längsrand (12) des Rückenelements (5) und mit dem ersten Längsrand (13) des Sitzelements (4) und ein viertes Zugelement (28) jeweils mit dem zweiten Längsrand (14) des Rückenelements (5) und mit dem zweiten Längsrand (15 des Sitzelements (4) verbunden ist.

4. Kindersitz (1) nach einem der Ansprüche 1 bis 3, **dadurch gekennzeichnet, dass** als erstes (25) und/oder zweites (26) und/oder drittes (27) und/oder viertes Zugelement (28) ein Zugseil, ein Zuggurt oder eine Kette vorgesehen ist.

5. Kindersitz (1) nach einem der Ansprüche 1 bis 4, **dadurch gekennzeichnet, dass** das Rückenelement (5) einen oberen Rückenteil (21) und einen unteren Rückenteil (22) aufweist, wobei das obere Rückenteil (21) über eine gelenkige Verbindung (23) mit dem unteren Rückenteil (22) verbunden ist, wobei bevorzugt das eine Ende des dritten Zugelements (27) an einem oberen Endbereich des ersten Längsrandes (29) des unteren Rückenteils (22) und das eine Ende des vierten Zugelements (34) an einem oberen Endbereich des zweiten Längsrandes (30) des unteren Rückenteils (22) befestigt ist, wobei das andere Ende des dritten Zugelements (27) bevorzugt im Wesentlichen mittig an dem ersten Längsrand (13) des Sitzelementes (4) und das andere Ende des vierten Zugelements (28) bevorzugt im Wesentlichen mittig an dem zweiten Längsrand (15) des Sitzelementes (4) befestigt ist.

6. Kindersitz (1) nach einem der Ansprüche 1 bis 5, **dadurch gekennzeichnet, dass** das Sitzelement (4) eine erste (35) und eine zweite Durchtrittsöffnung (36) zum Durchführen eines Gurtabschnitts (37) eines Sicherheitsgurtes (38) aufweist, wobei bevorzugt das Sitzelement (4) benachbart der ersten Durchtrittsöffnung (35) eine erste Umlenkkante (42) und benachbart der zweiten Durchtrittsöffnung (36) eine zweite Umlenkkante (43) für den Gurtabschnitt (37) des Sicherheitsgurtes (38) aufweist.

7. Kindersitz (1) nach Anspruch 6, **dadurch gekennzeichnet, dass** sich die erste Umlenkkante (42) des Sitzelements (4) in Längsrichtung des Sitzelements (4) gesehen zwischen den Befestigungsstellen (44,45) des ersten (25) und dritten Zugelements (27) an dem ersten Längsrand (13) des Sitzelements erstreckt, wobei sich die zweite Umlenkkante (43) des Sitzelements (4) in Längsrichtung des Sitzelements (4) gesehen zwischen den Befestigungsstellen (46,47) des zweiten (26) und vierten Zugelements (28) an dem zweiten Längsrand (15) des Sitzelements (4) erstreckt.

8. Kindersitz (1) nach Anspruch 6 oder 7, **dadurch gekennzeichnet, dass** die erste (42) und/oder die zweite Umlenkkante (43) des Sitzelements (4) abgeflacht ist.

9. Kindersitz (1) nach einem der Ansprüche 6 bis 8, **dadurch gekennzeichnet, dass** die erste (35) und/oder zweite Durchtrittsöffnung (36) einen sich in Richtung weg von einer Vorderkante (48) des Sitzelements (4) verbreiternden Abschnitt (49) aufweist.

10. Kindersitz (1) nach einem der Ansprüche 6 bis 9, **dadurch gekennzeichnet, dass** eine Gurtklemme (50) zum Festklemmen zumindest eines Gurtabschnitts (37) des Sicherheitsgurts (38) in Querrichtung des Sitzelements (4) gesehen zwischen der ersten (35) und zweiten Durchtrittsöffnung (36) des Sitzelements (4) vorgesehen ist.

11. Kindersitz (1) nach einem der Ansprüche 1 bis 10, **dadurch gekennzeichnet, dass** das Rückenelement (5), insbesondere das untere Rückenteil (22) des Rückenelements (5), vorzugsweise über ein Gleitgelenk (24) oder über ein Filmscharnier, gelenkig mit dem Sitzelement (4) verbunden ist.

12. Kindersitz (1) nach einem der Ansprüche 1 bis 11, **dadurch gekennzeichnet, dass** das erste Seitenelement (6) an einer Innenseite zumindest ein erstes Führungselement (31) zur Führung des ersten Zugelements (25) und/oder zumindest ein zweites Führungselement (32) zur Führung des dritten Zugelements (27) und/oder das zweite Seitenelement (8) an einer Innenseite zumindest ein drittes Führungselement (33) zur Führung des zweiten Zugelements (26) aufweist und/oder das zweite Seitenelement (8) an einer Innenseite zumindest ein viertes Führungselement (34) zur Führung des vierten Zugelements (28) aufweist.

13. Kindersitz (1) nach einem der Ansprüche 1 bis 12, **dadurch gekennzeichnet, dass** das Sitzelement (4) und/oder das Rückenelement (5) im Wesentlichen aus einem Hartplastikmaterial, insbesondere aus Polyamid oder Polypropylen, oder aus einem faserverstärkten Kunststoff gefertigt ist.

14. Kindersitz (1) nach einem der Ansprüche 1 bis 13, **dadurch gekennzeichnet, dass** das erste Seitenelement (6) an einer vorderen Stirnseite eine Anlagefläche (53) zur Anlage an einer Rückenlehne (54) des Fahrzeugsitzes (3) derart aufweist, dass das obere Ende der Anlagefläche im montierten Zustand des Kindersitzes (1) in einem Abstand von zumindest 170 mm in Längsrichtung der Rückenlehne (54) gesehen zum unteren Ende der Rückenlehne (54) angeordnet ist.

15. Fahrzeug mit einem Fahrzeugsitz (3) und mit einem Kindersitz (1), welcher mit Hilfe eines Gurtabschnitts (37) eines Sicherheitsgurtes (38) an dem Fahrzeugsitz (3) fixiert ist, **dadurch gekennzeichnet, dass** der Kindersitz nach einem der Ansprüche 1 bis 14 ausgebildet ist.

## Claims

1. Child safety seat (1) for attaching to a vehicle seat (3) of a vehicle in the opposite direction to the direction of travel thereof, comprising a seat element (4), a back element (5), a first side element (6) having a first inflatable air chamber (7) and a second side element (8) having a second inflatable air chamber (9), the first side element (6) being connected to a first longitudinal edge (12) of the back element (5) and a first longitudinal edge (13) of the seat element (4) and the second side element (8) being connected to a second longitudinal edge (14) of the back element (5) and a second longitudinal edge (15) of the seat element (4), **characterised in that** a first tension element (25) is connected in each case to the first longitudinal edge (12) of the back element (5) and to the first longitudinal edge (13) of the seat element (4) and a second tension element (26) is connected in each case to the second longitudinal edge (14) of the back element (5) and to the second longitudinal edge (15) of the seat element (4), the first tension element (25) and the second tension element (26) being arranged in a pre-tensioned state by the first (6) and second side element (7).

2. Child safety seat (1) according to claim 1, **characterised in that** the first tension element (25) is attached in each case to an upper end region of the first longitudinal edge (12) of the back element (5) and to a front end region of the first longitudinal edge (13) of the seat element (4), the second tension element (26) being attached in each case to an upper end region of the second longitudinal edge (14) of the back element (5) and to a front end region of the second longitudinal edge (15) of the seat element (4).

3. Child safety seat (1) according to either claim 1 or claim 2, **characterised in that** a third tension element (27) is connected in each case to the first longitudinal edge (12) of the back element (5) and to the first longitudinal edge (13) of the seat element (4) and a fourth tension element (28) is connected in each case to the second longitudinal edge (14) of the back element (5) and to the second longitudinal edge (15) of the seat element (4).

4. Child safety seat (1) according to any of claims 1 to 3, **characterised in that** a tension cable, a tension belt or a chain is provided as the first (25) and/or second (26) and/or third (27) and/or fourth tension element (28).

5. Child safety seat (1) according to any of claims 1 to 4, **characterised in that** the back element (5) has an upper back part (21) and a lower back part (22), the upper back part (21) being connected to the lower back part (22) by means of a hinged connection (23), with preferably one end of the third tension element (27) being attached to an upper end region of the first longitudinal edge (29) of the lower back part (22) and one end of the fourth tension element (34) being attached to an upper end region of the second longitudinal edge (30) of the lower back part (22), the other end of the third tension element (27) preferably being attached substantially in the centre to the first longitudinal edge (13) of the seat element (4) and the other end of the fourth tension element (28) preferably being attached substantially in the centre to the second longitudinal edge (15) of the seat element (4).

6. Child safety seat (1) according to any of claims 1 to 5, **characterised in that** the seat element (4) has a first (35) and a second through-opening (36) for guiding through a belt portion (37) of a safety belt (38), the seat element (4) preferably having a first deflecting edge (42) adjacent to the first through-opening (35) and a second deflecting edge (43) adjacent to the second through-opening (36) for the belt portion (37) of the safety belt (38).

7. Child safety seat (1) according to claim 6, **characterised in that** the first deflecting edge (42) of the seat element (4), when viewed in the longitudinal direction of the seat element (4), extends between the attachment points (44, 45) of the first (25) and third tension element (27) on the first longitudinal edge (13) of the seat element, the second deflecting edge (43) of the seat element (4), when viewed in the longitudinal direction of the seat element (4), extending between the attachment points (46, 47) of the second (26) and fourth tension element (28) on the second longitudinal edge (15) of the seat element (4).

8. Child safety seat (1) according to either claim 6 or claim 7, **characterised in that** the first (42) and/or the second deflecting edge (43) of the seat element (4) is flattened.

9. Child safety seat (1) according to any of claims 6 to 8, **characterised in that** the first (35) and/or second through-opening (36) comprises a portion (49) which widens in the direction away from a front edge (48) of the seat element (4).

10. Child safety seat (1) according to any of claims 6 to 9, **characterised in that** a belt clamp (50) is provided for clamping at least one belt portion (37) of the safety belt (38) between the first (35) and second through-opening (36) of the seat element (4), when viewed in the transverse direction of the seat element (4).

11. Child safety seat (1) according to any of claims 1 to 10, **characterised in that** the back element (5), in particular the lower back part (22) of the back element (5), is connected by a hinge to the seat element (4), preferably by means of a slip joint (24) or by means of a film hinge.

12. Child safety seat (1) according to any of claims 1 to 11, **characterised in that** the first side element (6) has, on an inner side, at least a first guide element (31) for guiding the first tension element (25) and/or at least a second guide element (32) for guiding the third tension element (27) and/or the second side element (8) has, on an inner side, at least a third guide element (33) for guiding the second tension element (26) and/or the second side element (8) has, on the inner side, at least a fourth guide element (34) for guiding the fourth tension element (28).

13. Child safety seat (1) according to any of claims 1 to 12, **characterised in that** the seat element (4) and/or the back element (5) is made substantially from a hard plastics material, in particular from polyamide or polypropylene, or from a fibre-reinforced plastics material.

14. Child safety seat (1) according to any of claims 1 to 13, **characterised in that** the first side element (6) has a contact surface (53) for contacting a backrest (54) of the vehicle seat (3) on a front end face such that the upper end of the contact surface, in the assembled state of the child seat (1), is arranged at a distance of at least 170 mm, when viewed in the longitudinal direction of the backrest (54), from the lower end of the backrest (54).

15. Vehicle having a vehicle seat (3) and having a child safety seat (1) which is secured to the vehicle seat (3) by a belt portion (37) of a safety belt (38), **characterised in that** the child safety seat is designed according to any of claims 1 to 14.

## Revendications

1. Siège pour enfant (1) destiné à être fixé sur un siège de véhicule (3) d'un véhicule dans le sens contraire de la marche de celui-ci, avec un élément d'assise (4), un élément dorsal (5), un premier élément latéral (6) avec une première chambre à air (7) gonflable et un deuxième élément latéral (8) avec une deuxième chambre à air (9) gonflable, le premier élément latéral (6) étant raccordé à un premier bord longitudinal (12) de l'élément dorsal (5) et à un premier bord longitudinal (13) de l'élément d'assise (4), et le deuxième élément latéral (8) étant raccordé à un deuxième bord longitudinal (14) de l'élément dorsal (5) et à un deuxième bord longitudinal (15) de l'élément d'assise (4), **caractérisé en ce qu'**un premier élément de traction (25) est raccordé respectivement au premier bord longitudinal (12) de l'élément dorsal (5) et au premier bord longitudinal (13) de l'élément d'assise (4), et un deuxième élément de traction (26) est raccordé respectivement au deuxième bord longitudinal (14) de l'élément dorsal (5) et au deuxième bord longitudinal (15) de l'élément d'assise (4), le premier élément de traction (25) et le deuxième élément de traction (26) étant disposés dans un état prétendu par le premier (6) et le deuxième élément latéral (7).

2. Siège pour enfant (1) selon la revendication 1, **caractérisé en ce que** le premier élément de traction (25) est fixé respectivement sur une zone extrême supérieure du premier bord longitudinal (12) de l'élément dorsal (5) et sur une zone extrême avant du premier bord longitudinal (13) de l'élément d'assise (4), le deuxième élément de traction (26) étant fixé respectivement sur une zone extrême supérieure du deuxième bord longitudinal (14) de l'élément dorsal (5) et sur une zone extrême avant du deuxième bord longitudinal (15) de l'élément d'assise (4).

3. Siège pour enfant (1) selon la revendication 1 ou 2, **caractérisé en ce qu'**un troisième élément de traction (27) est raccordé respectivement au premier bord longitudinal (12) de l'élément dorsal (5) et au premier bord longitudinal (13) de l'élément d'assise (4), et un quatrième élément de traction (28) est raccordé respectivement au deuxième bord longitudinal (14) de l'élément dorsal (5) et au deuxième bord longitudinal (15) de l'élément d'assise (4).

4. Siège pour enfant (1) selon l'une des revendications 1 à 3, **caractérisé en ce qu'**un câble de traction, une sangle de traction ou une chaîne est prévu(e) en tant que premier (25) et/ou deuxième (26) et/ou troisième (27) et/ou quatrième élément de traction (28).

5. Siège pour enfant (1) selon l'une des revendications 1 à 4, **caractérisé en ce que** l'élément dorsal (5) comporte une partie dorsale (21) supérieure et une partie dorsale (22) inférieure, la partie dorsale (21) supérieure étant raccordée à la partie dorsale (22) inférieure par le biais d'un raccordement (23) articulé, une extrémité du troisième élément de traction (27) étant de préférence fixée sur une zone extrême supérieure du premier bord longitudinal (29) de la partie dorsale (22) inférieure, et une extrémité du quatrième élément de traction (34) étant fixée sur une zone extrême supérieure du deuxième bord longitudinal (30) de la partie dorsale (22) inférieure, l'autre extrémité du troisième élément de traction (27) étant fixée de préférence essentiellement de façon centrée sur le premier bord longitudinal (13) de l'élément d'assise (4), et l'autre extrémité du quatrième élément de traction (28) étant fixée de préférence essentiellement de façon centrée sur le deuxième bord longitudinal (15) de l'élément d'assise (4).

6. Siège pour enfant (1) selon l'une des revendications 1 à 5, **caractérisé en ce que** l'élément d'assise (4) comporte une première (35) et une deuxième ouverture de passage (36) pour le passage d'un tronçon de ceinture (37) d'une ceinture de sécurité (38), l'élément d'assise (4) comportant de préférence, au voisinage de la première ouverture de passage (35), une première arête de déviation (42) et, au voisinage de la deuxième ouverture de passage (36), une deuxième arête de déviation (43) pour le tronçon de ceinture (37) de la ceinture de sécurité (38).

7. Siège pour enfant (1) selon la revendication 6, **caractérisé en ce que**, vu dans la direction longitudinale de l'élément d'assise (4), la première arête de déviation (42) de l'élément d'assise (4) s'étend entre les points de fixation (44, 45) du premier (25) et du troisième élément de traction (27) sur le premier bord longitudinal (13) de l'élément d'assise, la deuxième arête de déviation (43) de l'élément d'assise (4), vu dans la direction longitudinale de l'élément d'assise (4), s'étendant entre les points de fixation (46, 47) du premier (26) et du quatrième élément de traction (28) sur le deuxième bord longitudinal (15) de l'élément d'assise (4).

8. Siège pour enfant (1) selon la revendication 6 ou 7, **caractérisé en ce que** la première (42) et/ou la deuxième arête de déviation (43) de l'élément d'assise (4) est aplatie.

9. Siège pour enfant (1) selon l'une des revendications 6 à 8, **caractérisé en ce que** la première (35) et/ou la deuxième ouverture de passage (36) comporte un tronçon (49) s'élargissant en s'éloignant d'une arête avant (48) de l'élément d'assise (4).

10. Siège pour enfant (1) selon l'une des revendications 6 à 9, **caractérisé en ce que**, vu dans la direction transversale de l'élément d'assise (4), une pince de ceinture (50) est prévue entre la première (35) et la deuxième ouverture de passage (36) de l'élément d'assise (4) pour le blocage d'au moins un tronçon de ceinture (37) de la ceinture de sécurité (38).

11. Siège pour enfant (1) selon l'une des revendications 1 à 10, **caractérisé en ce que** l'élément dorsal (5), en particulier la partie dorsale (22) inférieure de l'élément dorsal (5), est raccordé de façon articulée à l'élément d'assise (4), de préférence par le biais d'une articulation coulissante (24) ou par le biais d'une charnière-film.

12. Siège pour enfant (1) selon l'une des revendications 1 à 11, **caractérisé en ce que**, sur un côté intérieur, le premier élément latéral (6) comporte au moins un premier élément de guidage (31) pour le guidage du premier élément de traction (25) et/ou au moins un deuxième élément de guidage (32) pour le guidage du troisième élément de traction (27), et/ou le deuxième élément latéral (8) comporte, sur un côté intérieur, au moins un troisième élément de guidage (33) pour le guidage du deuxième élément de traction (26), et/ou le deuxième élément latéral (8) comporte, sur un côté inférieur, au moins un quatrième élément de guidage (34) pour le guidage du quatrième élément de traction (28).

13. Siège pour enfant (1) selon l'une des revendications 1 à 12, **caractérisé en ce que** l'élément d'assise (4) et/ou l'élément dorsal (5) est fabriqué essentiellement en matériau plastique dur, en particulier en polyamide ou polypropylène, ou en matière synthétique renforcée de fibres.

14. Siège pour enfant (1) selon l'une des revendications 1 à 13, **caractérisé en ce que**, sur un côté frontal avant, le premier élément latéral (6) comporte une surface d'appui (53) pour l'appui sur un dossier (54) du siège de véhicule (3) de telle sorte que l'extrémité supérieure de la surface d'appui, dans l'état monté du siège pour enfant (1), est disposée à une distance d'au moins 170 mm de l'extrémité inférieure du dossier (54), vu dans la direction longitudinale du dossier (54).

15. Véhicule avec un siège de véhicule (3) et avec un siège pour enfant (1) qui est fixé sur le siège de véhicule (3) à l'aide d'un tronçon de ceinture (37) d'une ceinture de sécurité (38), **caractérisé en ce que** le siège pour enfant est constitué selon l'une des revendications 1 à 14.
